# EUROPEAN PATENT APPLICATION

(11) **EP 3 832 931 A1**
(43) Date of publication of application: **09.06.2021**
(21) Application number: 19852926.5
(22) Date of filing: 19.08.2019
(51) Int. Cl.: H04L 1/18

(54) **HARQ FEEDBACK METHOD AND DEVICE**

(30) Priority: 20.08.2018 CN 201810949915
(71) Applicant: HUAWEI TECHNOLOGIES CO., LTD., Shenzhen, Guangdong 518129 (CN)
(72) Inventor: JIA, Qiong, Guangdong 518129 (CN); ZHU, Jun, Guangdong 518129 (CN); WU, Ji, Guangdong 518129 (CN)
(74) Representative: Epping - Hermann - Fischer
(86) International application number: PCT/CN2019/101434
(87) International publication number: WO 2020/038340

(57) **Abstract**

Embodiments of this application provide a HARQ feedback method, including: sending, by a base station, first indication information, where the first indication information is used to indicate a terminal to perform HARQ feedback; sending, by the base station, second indication information, where the second indication information includes second time information used to indicate the terminal to perform the HARQ feedback; and receiving, by the base station, HARQ feedback information of the terminal. Optionally, the base station may send the first indication information within a first channel occupancy time COT, and send the second indication information within a second COT. The HARQ feedback is indicated in a two-step scheduling manner, so that a probability of accessing a channel by the terminal can be increased, and further, transmission of the HARQ feedback can be effectively ensured.

## Description

### TECHNICAL FIELD

This application relates to the field of communications technologies, and in particular, to a HARQ feedback method and an apparatus.

### BACKGROUND

Rapid development of wireless communications technologies leads to an increasing shortage of spectrum resources, promoting exploration of unlicensed frequency bands. 3GPP introduces a licensed assisted access (License Assisted Access, LAA) technology and an enhanced licensed assisted access (enhanced LAA, eLAA) technology. In other words, a non-standalone (Non-standalone) LTE/LTE-A system is deployed on an unlicensed spectrum, and utilization of unlicensed spectrum resources is maximized through assistance of a licensed spectrum.

Communications systems deployed on an unlicensed spectrum usually use or share radio resources through contention. Generally, before sending a signal, a transmit end first monitors whether an unlicensed channel (or an unlicensed spectrum) is idle. For example, the transmit end determines a busy or idle state of an unlicensed spectrum by detecting power of a received signal on the unlicensed spectrum. If the power of the received signal is less than a specific threshold, the unlicensed spectrum is considered to be in the idle state, and the transmit end may send a signal on the unlicensed spectrum. Otherwise, the transmit end does not send a signal. This mechanism of listening before sending is referred to as listen before talk (Listen Before Talk, LBT).

When LBT is performed, due to uncertainty of a channel occupation status, a base station or a terminal cannot always send a signal in time. In this case, for transmission of a hybrid automatic repeat request (Hybrid Automatic Repeat reQuest, hybrid ARQ or HARQ), if an ACK/NACK is not provided in time due to LBT, subsequent transmission is affected.

### SUMMARY

Embodiments of this application provide a HARQ feedback method and an apparatus, to effectively ensure transmission of a HARQ feedback.

According to a first aspect, an embodiment of this application provides a HARQ feedback method, including: Abase station sends first indication information, where the first indication information is used to indicate a terminal to perform HARQ feedback. The base station sends second indication information, where the second indication information includes second time information used to indicate the terminal to perform the HARQ feedback. The base station receives HARQ feedback information of the terminal. Optionally, the base station may send the first indication information within a first channel occupancy time (channel occupancy time, COT), and send the second indication information within a second COT.

Because the HARQ feedback is performed within the channel occupancy time of the base station, the terminal may access a channel in a CAT2 mode. Compared with accessing a channel in a random backoff-based CAT4 mode, there is a higher probability of accessing the channel in the CAT2 mode. In addition, the HARQ feedback that is based on two-step scheduling may shorten a scheduling delay compared with HARQ feedback that is directly based on an LBT result. In this case, a probability of channel loss is also reduced. The HARQ feedback is indicated in a two-step scheduling manner, so that a probability of accessing a channel by the terminal can be increased, and further, transmission of the HARQ feedback can be effectively ensured.

In a possible design, the second time information includes a time offset of a time at which the HARQ feedback is performed relative to the second indication information, or the second time information includes an absolute time at which the HARQ feedback is performed. The second time information is notified to the terminal, so that the terminal can learn of the time at which the HARQ feedback is to be performed.

In a possible design, a time offset between a time at which the base station sends the first indication information and a time at which the base station sends the second indication information is not greater than preset duration. The first indication information further includes information used to indicate the preset duration. The information about the preset duration is notified to the terminal, so that the terminal can be prevented from unlimitedly waiting to receive the second indication information, thereby reducing blind detection overheads.

In a possible design, the second indication information further includes information about one or more HARQ feedback resources assigned to the terminal. Optionally, the second indication information further includes information about a plurality of HARQ feedback resources assigned to a plurality of terminals, where one or more HARQ feedback resources are assigned to each terminal in the plurality of terminals, and the plurality of terminals include the terminal. Further, the first indication information further includes first time information, and the first time information includes a first time offset. The first time information is used to indicate the terminal to perform the HARQ feedback on one or more HARQ feedback resources that are offset by the first time offset and a second time offset relative to the time at which the second indication information is sent. The information about the HARQ feedback resources is notified to the terminal, so that the terminal can perform HARQ feedback on a determined resource, thereby ensuring a success rate of the HARQ feedback.

According to a second aspect, an embodiment of this application provides a HARQ feedback method, including: A terminal receives first indication information, where the first indication information is used to indicate the terminal to perform HARQ feedback. The terminal receives second indication information, where the second indication information includes second time information used to indicate the terminal to perform the HARQ feedback. The terminal sends HARQ feedback information to a base station. Optionally, the terminal receives the first indication information within a first channel occupancy time COT of the base station, and receives the second indication information within a second COT of the base station.

Because the HARQ feedback is performed within the channel occupancy time of the base station, the terminal may access a channel in a CAT2 mode. Compared with accessing a channel in a random backoff-based CAT4 mode, there is a higher probability of accessing the channel in the CAT2 mode. In addition, the HARQ feedback that is based on two-step scheduling may shorten a scheduling delay compared with HARQ feedback that is directly based on an LBT result. In this case, a probability of channel loss is also reduced. The HARQ feedback is indicated in a two-step scheduling manner, so that a probability of accessing a channel by the terminal can be increased, and further, transmission of the HARQ feedback can be effectively ensured.

In a possible design, the second time information includes a time offset of a time at which the HARQ feedback is performed relative to the second indication information, or the second time information includes an absolute time at which the HARQ feedback is performed. The second time information is notified to the terminal, so that the terminal can learn of the time at which the HARQ feedback is to be performed.

In a possible design, a time offset between a time at which the base station sends the first indication information and a time at which the base station sends the second indication information is not greater than preset duration. The first indication information further includes information used to indicate the preset duration. The information about the preset duration is notified to the terminal, so that the terminal can be prevented from unlimitedly waiting to receive the second indication information, thereby reducing blind detection overheads.

In a possible design, the second indication information further includes information about one or more HARQ feedback resources assigned to the terminal. Optionally, the second indication information further includes information about a plurality of HARQ feedback resources assigned to a plurality of terminals, where one or more HARQ feedback resources are assigned to each terminal in the plurality of terminals, and the plurality of terminals include the terminal. Further, the first indication information further includes first time information, and the first time information includes a first time offset. The first time information is used to indicate the terminal to perform the HARQ feedback on one or more HARQ feedback resources that are offset by the first time offset and a second time offset relative to the time at which the second indication information is sent. The information about the HARQ feedback resources is notified to the terminal, so that the terminal can perform HARQ feedback on a determined resource, thereby ensuring a success rate of the HARQ feedback.

According to a third aspect, an embodiment of this application provides a base station, including a transmitter and a receiver. The transmitter is configured to: send first indication information, where the first indication information is used to indicate a terminal to perform HARQ feedback; and send second indication information, where the second indication information includes second time information used to indicate the terminal to perform the HARQ feedback. The receiver is configured to receive HARQ feedback information of the terminal. The base station may send the first indication information within a first COT, and send the second indication information within a second COT. Alternatively, the base station performs an LBT operation after sending the first indication information.

In a possible design, the second time information includes a time offset of a time at which the HARQ feedback is performed relative to the second indication information, or the second time information includes an absolute time at which the HARQ feedback is performed. The second time information is notified to the terminal, so that the terminal can learn of the time at which the HARQ feedback is to be performed.

In a possible design, a time offset between a time at which the base station sends the first indication information and a time at which the base station sends the second indication information is not greater than preset duration. The first indication information further includes information used to indicate the preset duration. The information about the preset duration is notified to the terminal, so that the terminal can be prevented from unlimitedly waiting to receive the second indication information, thereby reducing blind detection overheads.

In a possible design, the second indication information further includes information about one or more HARQ feedback resources assigned to the terminal. Optionally, the second indication information further includes information about a plurality of HARQ feedback resources assigned to a plurality of terminals, where one or more HARQ feedback resources are assigned to each terminal in the plurality of terminals, and the plurality of terminals include the terminal. Further, the first indication information further includes first time information, and the first time information includes a first time offset. The first time information is used to indicate the terminal to perform the HARQ feedback on one or more HARQ feedback resources that are offset by the first time offset and a second time offset relative to the time at which the second indication information is sent. The information about the HARQ feedback resources is notified to the terminal, so that the terminal can perform HARQ feedback on a determined resource, thereby ensuring a success rate of the HARQ feedback.

According to a fourth aspect, an embodiment of this application provides a terminal, including a transmitter and a receiver. The receiver is configured to: receive first indication information, where the first indication information is used to indicate the terminal to perform HARQ feedback; and receive second indication information, where the second indication information includes second time information used to indicate the terminal to perform the HARQ feedback. The transmitter is configured to send HARQ feedback information to a base station.

In a possible design, the second time information includes a time offset of a time at which the HARQ feedback is performed relative to the second indication information, or the second time information includes an absolute time at which the HARQ feedback is performed. The second time information is notified to the terminal, so that the terminal can learn of the time at which the HARQ feedback is to be performed.

In a possible design, a time offset between a time at which the base station sends the first indication information and a time at which the base station sends the second indication information is not greater than preset duration. The first indication information further includes information used to indicate the preset duration. The information about the preset duration is notified to the terminal, so that the terminal can be prevented from unlimitedly waiting to receive the second indication information, thereby reducing blind detection overheads.

In a possible design, the second indication information further includes information about one or more HARQ feedback resources assigned to the terminal. Optionally, the second indication information further includes information about a plurality of HARQ feedback resources assigned to a plurality of terminals, where one or more HARQ feedback resources are assigned to each terminal in the plurality of terminals, and the plurality of terminals include the terminal. Further, the first indication information further includes first time information, and the first time information includes a first time offset. The first time information is used to indicate the terminal to perform the HARQ feedback on one or more HARQ feedback resources that are offset by the first time offset and a second time offset relative to the time at which the second indication information is sent. The information about the HARQ feedback resources is notified to the terminal, so that the terminal can perform HARQ feedback on a determined resource, thereby ensuring a success rate of the HARQ feedback.

According to a fifth aspect, an embodiment of this application provides a communications system, including a base station and a terminal. The base station is the base station according to the third aspect. The terminal is the terminal according to the fourth aspect.

According to a sixth aspect, an embodiment of this application provides a chip. The chip is connected to a memory, and is configured to read and execute a software program stored in the memory, to implement the method provided in any one of the first aspect, the second aspect, or any design of the first aspect or the second aspect.

According to a seventh aspect, an embodiment of this application provides a chip. The chip includes a processor and a memory. The processor is configured to read a software program stored in the memory, to implement the method provided in any one of the first aspect, the second aspect, or any design of the first aspect or the second aspect. According to an eighth aspect, an embodiment of this application further provides a computer-readable storage medium, configured to store a computer software instruction used to perform a function of any one of the first aspect to the third aspect or any design of the first aspect to the third aspect, and the computer software instruction includes a program designed to perform the method in any one of the first aspect, the second aspect, or any design of the first aspect or the second aspect.

According to a ninth aspect, an embodiment of this application provides a computer program product including an instruction. When the computer program product runs on a computer, the computer is enabled to perform the method in any one of the first aspect, the second aspect, or any design of the first aspect or the second aspect.

### BRIEF DESCRIPTION OF DRAWINGS

FIG. 1 shows a communications system;
FIG. 2 shows a HARQ feedback method according to an embodiment of this application;
FIG. 3 is a schematic diagram of a HARQ feedback time sequence;
FIG. 4 is another schematic diagram of a HARQ feedback time sequence;
FIG. 5 is a schematic structural diagram of first indication information;
FIG. 6 is a schematic structural diagram of second indication information;
FIG. 7 is a schematic structural diagram of a communications apparatus according to an embodiment of this application;
FIG. 8 is a schematic structural diagram of a base station according to an embodiment of this application; and
FIG. 9 is a schematic structural diagram of a terminal according to an embodiment of this application.

### DESCRIPTION OF EMBODIMENTS

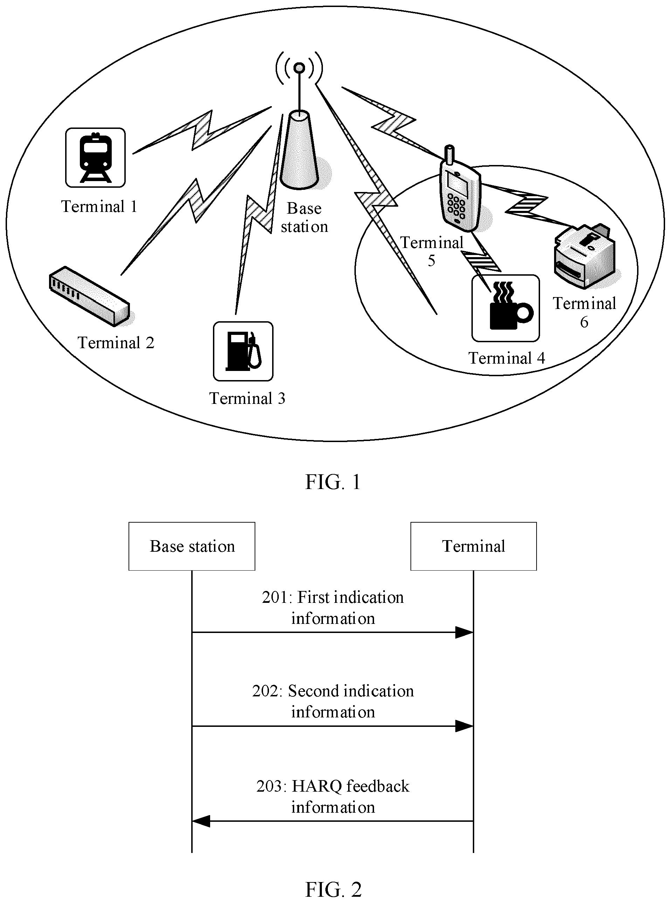

Embodiments of this application may be applied to a 5G system, or may be applied to another communications system. As long as an entity in a communications system needs to send data and perform HARQ feedback, the method provided in the embodiments of this application may be applied. Specifically, the communications system includes but is not limited to a long term evolution (long term evolution, LTE) system, a long term evolution-advanced (long term evolution-advanced, LTE-A) system, a new radio (new radio, NR) system, and a 5G (5^{th} generation) system. This application may be further expanded to a wireless fidelity (wireless fidelity, WiFi) system, a worldwide interoperability for microwave access (worldwide interoperability for microwave access, wimax) system, and the like. FIG. 1 shows a communications system. As shown in FIG. 1, a base station (Base station, BS) and a terminal 1 to a terminal 6 form a communications system. In the communications system, the terminal 1 to the terminal 6 may send uplink data to the base station. The base station receives the uplink data sent by the terminal 1 to the terminal 6. In addition, the terminal 4 to the terminal 6 may also form a communications sub-system. In the communications system, the BS may send downlink information to the terminal 1, the terminal 2, the terminal 5, and the like. The terminal 5 may also send downlink information to the terminal 4 and the terminal 6.

The base station may be a common base station (for example, a Node B or an eNB), a new radio controller (new radio controller, NR controller), a gNodeB (gNB) in a 5G system, a centralized unit (centralized unit), a new radio base station, a remote radio unit, a micro base station, a distributed unit (distributed unit), a transmission reception point (transmission reception point, TRP), a transmission point (transmission point, TP), or any other radio access device. The embodiments of this application are not limited thereto.

The terminal may be a device that has a function of communicating with the base station and a relay node, or may be a device that provides voice and/or data connectivity for a user. For example, the terminal may be a handheld device, a vehicle-mounted device, or the like having a wireless connection function. Common terminals include, for example, a mobile phone, a tablet, a notebook computer, a palmtop computer, a mobile internet device (mobile internet device, MID), and a wearable device such as a smartwatch, a smart band, or a pedometer. The terminal may also be referred to as user equipment (user equipment, UE).

During downlink transmission, the base station dynamically indicates, by using downlink control information (downlink control information, DCI) or semi-statically indicates, by using radio resource control (Radio Resource Control, RRC) configuration signaling, a time at which the terminal performs HARQ feedback. That is, the base station notifies the terminal of a time for performing HARQ feedback.

Specifically, if the terminal receives dynamically scheduled or semi-statically scheduled downlink data (or physical downlink shared channel (Physical Downlink Shared Channel, PDSCH)) in a slot n, the terminal needs to perform HARQ feedback for the downlink data in a slot n+k. A value of k may be indicated by a PDSCH-to-HARQ feedback timing indicator field in DCI, or may be determined based on a dl-DataToUL-ACK field included in higher layer signaling (for example, RRC signaling).

In a 5G system, a time relationship between a downlink data transmission and a corresponding HARQ feedback may be determined by the value of k. However, when an unlicensed frequency band is used for communication, due to uncertainty of LBT, the terminal cannot perform HARQ feedback based on a specified time relationship (for example, k), affecting system performance.

FIG. 2 shows a HARQ feedback method according to an embodiment of this application. Based on the method, when sending downlink data, a base station needs to notify a terminal of how to perform HARQ feedback for the downlink data. Specifically, when indicating the terminal how to perform the HARQ feedback, the base station needs to sequentially send two (more than two in some scenarios) pieces of indication information. This manner may be referred to as two-step scheduling. Therefore, this HARQ feedback manner may be referred to as two-step scheduling based HARQ feedback. The method includes the following several steps.

Step 201: The base station sends first indication information.

Step 202: The base station sends second indication information.

Step 203: The base station receives HARQ feedback information of the terminal.

The first indication information is used to indicate that the terminal needs to perform HARQ feedback for a corresponding downlink data transmission. The second indication information is used to indicate a time at which the terminal performs the HARQ feedback. Specifically, the first indication information is used to indicate the terminal to perform the HARQ feedback, or used to indicate the terminal to receive the second indication information, or used to trigger the terminal to perform the HARQ feedback, or used to trigger the terminal to receive the second indication information, or used to indicate a type of the HARQ feedback in an unlicensed spectrum communication scenario. The second indication information includes second time information used to indicate the terminal to perform the HARQ feedback. Further, the first indication information or the second indication information may be sent to the terminal by using DCI.

In a possible implementation, the base station sends the first indication information within a first channel occupancy time COT, and sends the second indication information within a second COT. In another possible implementation, the base station performs LBT after sending the first indication information. The base station sends the second indication information after obtaining a channel through contention.

Because the HARQ feedback is performed within the channel occupancy time of the base station, the terminal may access the channel in a CAT2 mode (where the CAT2 mode may also be referred to as a type2 channel access procedure, that is, the terminal may access the channel after listening to the channel and learning that the channel is idle for 25 µs). Compared with accessing a channel in a random backoff-based CAT4 mode (where the CAT4 mode is also referred to as a type I channel access procedure), there is a higher probability of accessing a channel in the CAT2 mode. In addition, the HARQ feedback that is based on two-step scheduling may shorten a scheduling delay compared with HARQ feedback that is directly based on an LBT result. In this case, a probability of channel loss is also reduced. The HARQ feedback is indicated in a two-step scheduling manner, so that a probability of accessing a channel by the terminal can be increased, and further, transmission of the HARQ feedback can be effectively ensured.

The following describes in detail related features of the method shown in FIG. 2.

The first indication information is used to indicate that the terminal needs to perform HARQ feedback for a corresponding downlink data transmission. The second indication information is used to indicate the time at which the terminal performs the HARQ feedback. The first indication information may be referred to as trigger signaling A (trigger A). The second indication information may be referred to as trigger signaling B (trigger B). The first indication information may be terminal-specific indication information. In other words, the first indication information may be sent to a specific terminal. The second indication information may be terminal-specific indication information. Alternatively, the second indication information may be common indication information. In other words, the second indication information may be sent to a plurality of terminals, all terminals in a group, or all terminals in a cell. It should be understood that, when receiving the first indication information, the terminal may learn that a HARQ feedback corresponding to a corresponding downlink data transmission is a two-step scheduling based HARQ feedback. Therefore, the terminal further needs to receive the second indication information.

In a possible implementation, the first indication information may be indicated by using one bit (bit). For example, a 1-bit field may be added to downlink control information to carry the first indication information. Specifically, a 1-bit field may be added to a DCI format 1_0/DCI format 1_1 in an NR system, to carry the first indication information. In another possible implementation, the first indication information may be indicated by reusing some fields in downlink control information. For example, when some fields in the DCI are preset values, the fields may be used as the first indication information. Specifically, the DCI format 1_0/DCI format 1_1 in the NR system includes a field "PDSCH-to-HARQ_feedback timing indicator". When the field is set to a specific value, for example, "000", the field may be used as the first indication information. That is, the field is used to notify the terminal that HARQ feedback needs to be performed for the downlink data transmission, or to notify the terminal that the second indication information needs to be received.

Optionally, the first indication information may alternatively be indicated implicitly. For example, when downlink scheduling information is within a specific time range, the downlink scheduling information may be used as the first indication information. Specifically, when the downlink scheduling information is located in the last slot of a COT or located in the middle or at the tail of a COT, the downlink scheduling information may be used as the first indication information. In this case, after the terminal receives the downlink scheduling information within the specific time range, the terminal receives the first indication information. In this way, the terminal may learn that the terminal needs to perform the HARQ feedback, or the terminal is notified that the terminal needs to receive the second indication information.

Further, the first indication information may indicate a quantity of downlink data transmissions of the terminal that require a HARQ feedback. In a scenario in which uplink and downlink slots are unpaired, the terminal may need to perform HARQ feedback for a plurality of previous downlink data transmissions. In addition, in a scenario in which a HARQ feedback fails, the terminal may also need to perform HARQ feedback for a plurality of previous downlink data transmissions. At least one bit is required to indicate an ACK or a NACK when HARQ feedback is performed for one downlink data transmission. Therefore, the first indication information may be used to indicate a quantity of bits required for performing HARQ feedback needs to be performed. The quantity of bits is a corresponding quantity of downlink data transmissions for which HARQ feedback is performed. In this case, the first indication information may need to be indicated by using a plurality of bits. For example, a plurality of bits are added or a plurality of fields in the downlink control information are reused to carry the first indication information.

Further, the first indication information may further indicate downlink data transmissions for which HARQ feedback needs to be performed by the terminal. For example, HARQ process (HARQ process) information corresponding to one or more downlink data transmissions for which HARQ feedback needs to be performed may be indicated explicitly or implicitly. Optionally, the terminal may be indicated, in a manner in which the terminal is notified of one or more HARQ process IDs/numbers, to perform HARQ feedback for one or more downlink data transmissions corresponding to the one or more HARQ process IDs/numbers. Specifically, the one or more HARQ process IDs/numbers may be explicitly carried in the first indication information. Alternatively, the one or more HARQ process IDs/numbers may be indicated in a bitmap (bitmap). Each bit in the bitmap corresponds to one HARQ process ID/number (or it may be considered that each bit in the bitmap indicates one HARQ process). In a possible implementation, if the bit is a first value (for example, "1"), it indicates that HARQ feedback needs to be performed for a downlink data transmission corresponding to a HARQ process indicated by the bit. If the bit is a second value (for example, "0"), it indicates that HARQ feedback does not need to be performed for a downlink data transmission corresponding to a HARQ process indicated by the bit. Further, HARQ processes may be further grouped. The first indication information is used to indicate grouping information of HARQ processes corresponding to one or more downlink data transmissions that require a HARQ feedback. In this way, signaling overheads can be reduced. Optionally, a HARQ process ID and other information (for example, time information) may be jointly encoded, to further reduce the signaling overheads. Further, the first indication information further includes first time information for indicating the terminal to perform HARQ feedback. In a scenario in which HARQ feedback is performed on a plurality of resources assigned by the base station to a plurality of terminals, for a determined terminal, the base station needs to notify the terminal of a resource that is in the plurality of resources and that can be used by the terminal to perform HARQ feedback. Therefore, the base station completes the notification by using the first time information. For example, the first time information may be an offset of a start position of a resource on which the terminal performs the HARQ feedback relative to a start position of the plurality of resources. The first time information may be carried by adding a field to the DCI, or may be indicated by reusing some fields in the existing DCI. For example, the DCI format 1_0/DCI format 1_1 in the NR system includes a field "PDSCH-to-HARQfeedback timing indicator". A newly added one bit is used to indicate the terminal to perform HARQ feedback (for example, two-step scheduling based HARQ feedback). A bit in the field "PDSCH-to-HARQ feedback timing indicator" may be used for the first time information. Alternatively, the first bit in the field is used to indicate the terminal to perform HARQ feedback. Remaining bits in the field are used to indicate the first time information.

In a possible implementation, the first indication information may be sent together with the downlink scheduling information, or may be sent separately. In other words, the first indication information may be independent control information, or may be carried in the existing DCI. For a manner of carrying the first indication information in the DCI, if the base station only needs to indicate the terminal to perform HARQ feedback, but has no downlink data, a resource assignment field in the DCI may be set to zero. For example, a field "Frequency domain resource assignment" included in the DCI format 1_0/DCI format 1_1 in the NR system is set to zero, indicating that no downlink data is to be transmitted. In this case, setting the field to zero may further indicate the first indication information. That is, the field is used to notify the terminal that HARQ feedback needs to be performed for the downlink data transmission. The terminal receives the first indication information. The terminal may learn that the terminal needs to perform HARQ feedback (for example, two-step scheduling based HARQ feedback). Therefore, the terminal waits to receive the second indication information, to further learn of the second time information for performing the HARQ feedback. The second time information may be one or more of a time offset of a time at which the terminal performs the HARQ feedback relative to a time of receiving the second indication information, or duration (or a time resource) that may be used for the HARQ feedback. The time offset may be a time offset common to a plurality of terminals.

The second indication information may be information specific to a terminal (for example, terminal-specific information). Alternatively, the second indication information is common control information. For example, the second indication information may be carried on a common-physical downlink control channel (common-physical downlink control channel, C-PDCCH) or a group common-physical downlink control channel (group common-physical downlink control channel, GC-PDCCH) for transmission.

In a possible implementation, the second indication information needs to indicate a moment at which the terminal performs the HARQ feedback. That is, the second indication information includes the second time information for the HARQ feedback. The second time information may be a time offset of a time at which the terminal performs HARQ feedback relative to a time at which the terminal receives the second indication information, or the second time information is an absolute time at which the terminal performs the HARQ feedback. Further, the second indication information may further indicate a quantity of downlink data transmissions of the terminal that require a HARQ feedback. That is, the second indication information may be used to indicate a quantity of required for performing HARQ feedback needs to be performed. Alternatively, the second indication information may be further used to update a quantity of HARQ bits that need to be fed back by the terminal and that are already indicated in the first indication information and/or other scheduling information (for example, a downlink assignment index (Downlink Assignment Index, DAI) field in the DCI).

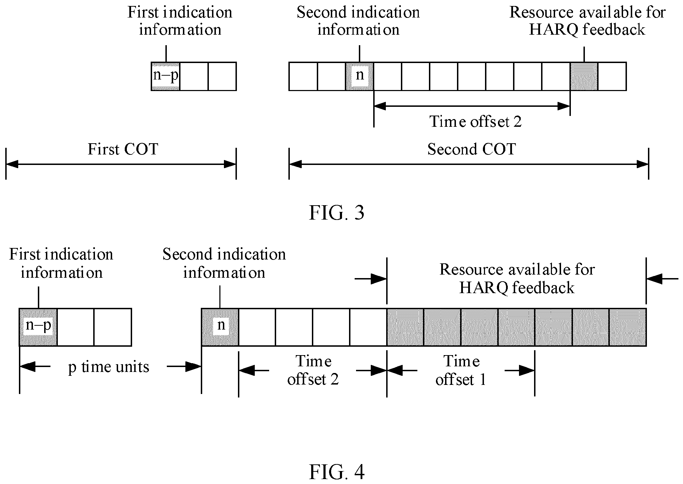

Further, the second indication information further carries information about a resource available for a HARQ feedback. Specifically, the second indication information includes information about one or more HARQ feedback resources assigned to the terminal. When the second indication information is common control information, the second indication information may include information about a plurality of HARQ feedback resources assigned to a plurality of terminals. One or more HARQ feedback resources are assigned to each terminal in the plurality of terminals. The HARQ feedback resource in this embodiment of this application may be a time resource, for example, a time unit in FIG. 3 or FIG. 4.

Further, the second indication information may further indicate downlink data transmissions for which HARQ feedback needs to be performed by the terminal (it should be understood that an indication in the first indication information may be refreshed). For example, HARQ process (HARQ process) information corresponding to one or more downlink data transmissions that require a HARQ feedback may be indicated explicitly or implicitly. Optionally, the terminal may be indicated, in a manner in which the terminal is notified of one or more HARQ process IDs/numbers, to perform HARQ feedback for one or more downlink data transmissions corresponding to the one or more HARQ process IDs/numbers. Specifically, the one or more HARQ process IDs/numbers may be explicitly carried in the first indication information. Alternatively, the one or more HARQ process IDs/numbers may be indicated in a bitmap (bitmap). Each bit in the bitmap corresponds to one HARQ process ID/number (or it may be considered that each bit in the bitmap indicates one HARQ process). In a possible implementation, if the bit is a first value (for example, " 1"), it indicates that HARQ feedback needs to be performed for a downlink data transmission corresponding to a HARQ process indicated by the bit. If the bit is a second value (for example, "0"), it indicates that HARQ feedback does not need to be performed for a downlink data transmission corresponding to a HARQ process indicated by the bit. Further, HARQ processes may be further grouped. The first indication information is used to indicate grouping information of HARQ processes corresponding to one or more downlink data transmissions that require a HARQ feedback. In this way, signaling overheads can be reduced. Optionally, a HARQ process ID and other information (for example, time information) may be jointly encoded, to further reduce the signaling overheads.

In a possible implementation, the second indication information may be sent together with the downlink scheduling information, or may be sent separately. In other words, the second indication information may be independent control information, or may be carried in the existing DCI. For a manner of carrying the second indication information in the DCI, if the base station only needs to indicate, to the terminal, when to perform HARQ feedback, but has no downlink data, a resource assignment field in the DCI may be set to zero. For example, a field "Frequency domain resource assignment" included in the DCI format 1_0/DCI format 1_1 in the NR system is set to zero, indicating that no downlink data is to be transmitted. Further, the second indication information may be further indicated when the field is set to another specific value. That is, the field is used to notify the terminal of a time for performing the HARQ feedback for the downlink data transmission.

Optionally, a time offset between sending of the first indication information and sending of the second indication information by the base station needs to meet a specific condition. For example, the time offset is not greater than preset duration. The preset duration may be carried in the first indication information. After receiving the first indication information, the terminal learns that HARQ feedback needs to be performed for the downlink data transmission. Therefore, the terminal may need to wait to receive the second indication information. If a format of DCI that carries the second indication information is different from a format of DCI that carries the first indication information, the terminal is indicated to blindly detect the second indication information within the preset duration, and the terminal may not perform blind detection after the preset duration is exceeded, thereby reducing overheads. If the existing DCI is used to carry the second indication information, the base station may not send information about the preset duration. The terminal learns, by receiving the second indication information, of the second time information that is indicated by the base station and that is for performing the HARQ feedback. When the first indication information includes the information about the preset duration, the terminal waits to receive the second indication information within the preset duration. When a waiting time of the terminal exceeds the preset duration, the terminal no longer waits to receive the second indication information. Optionally, when the first indication information includes the first time information, the terminal may learn, with reference to the second time information in the second indication information, of information about a time at which HARQ feedback is actually performed. For example, a time offset between the time at which the terminal actually sends the HARQ feedback and a time at which the terminal receives the second indication information is equal to a sum of a time offset indicated by the first time information and a time offset indicated by the second time information. In other words, the terminal may perform HARQ feedback on a HARQ feedback resource determined based on the first indication information and the second indication information.

Optionally, the field (or control signaling) used to carry the first indication information is further used to indicate whether the terminal uses two-step scheduling to perform HARQ feedback. That is, the control signaling (or field) may have at least two values. A first value indicates that the field carries the first indication information, or the field indicates that the terminal uses the two-step scheduling to perform HARQ feedback. A second value indicates that the field indicates that the terminal does not use two-step scheduling to perform HARQ feedback.

Optionally, one or more fields in the existing downlink control information may be reused to indicate whether the terminal uses the two-step scheduling to perform HARQ feedback. For example, when some fields in the DCI are preset values, the fields may be used to indicate the terminal to use the two-step scheduling to perform HARQ feedback. Specifically, the DCI format 1_0/DCI format 1_1 in the NR system includes a field "PDSCH-to-HARQ feedback timing indicator". All possible values of the field "PDSCH-to-HARQ_feedback timing indicator" are grouped, for example, are grouped into a group A and a group B. If a value of the field is in the group A, it indicates that the DCI includes the first indication information, that is, the terminal is indicated to perform HARQ feedback for a downlink data transmission. If a value of the field is in the group B, it indicates that the DCI does not include the first indication information, that is, the terminal is indicated not to perform HARQ feedback for a downlink data transmission or not to use the two-step scheduling to perform HARQ feedback. Optionally, an actual value of the field may be used to indicate the preset duration and/or the first time information in the first indication information. One or two of the effective window and HARQ feedback time information.

Optionally, the control signaling used to carry the first indication information or the second indication information may further include identification information, and the identification information is used to indicate whether the signaling carries the first indication information or the second indication information. Specifically, when the identification information is set to a first value, it indicates that the control information carries the first indication information. When the identification information is set to a second value, it indicates that the control information carries the second indication information. Certainly, the identification information may be a part of the first indication information or the second indication information.

The following further describes the HARQ feedback method provided in this embodiment with reference to FIG. 3 to FIG. 6.

FIG. 3 is a schematic diagram of a HARQ feedback time sequence. As shown in FIG. 3, after obtaining the first channel occupancy time COT, if the base station cannot schedule, within the first COT, the terminal to perform HARQ feedback, the two-step scheduling may be used to perform HARQ feedback. In a possible implementation, the base station obtains a right of use of a channel by using a random backoff-based channel access mechanism. Specifically, the base station sends the first indication information within the first COT, to notify the terminal that HARQ feedback needs to be performed for a corresponding downlink data transmission. After obtaining a right of use of a new channel, that is, after obtaining the second COT, the base station sends the second indication information within the second COT, to indicate, to the terminal, when to perform HARQ feedback. Certainly, the base station and the terminal may alternatively perform HARQ feedback that is based on two-step scheduling within one COT. In other words, whether the HARQ feedback that is based on two-step scheduling is completed in one COT is not limited, and for implementation thereof, refer to a related embodiment of this application (for example, an embodiment shown in FIG. 4).

If the terminal receives the first indication information in a time unit n-p, the terminal needs to wait to receive the second indication information. The terminal receives the second indication information in a time unit n, where the second indication information carries information about a time offset 2. The time offset 2 is the second time information. The terminal may learn that the terminal may perform HARQ feedback in a corresponding time unit that is offset by the time offset 2 relative to the time unit n.

The second indication information shown in FIG. 3 is specific to a specific terminal. Therefore, the terminal needs to know only the second time information to learn of a time for performing HARQ feedback, but no longer requires the first time information. That is, after obtaining the time offset 2, the terminal learns of a time resource for performing HARQ feedback. The terminal performs HARQ feedback on the resource.

FIG. 4 is another schematic diagram of a HARQ feedback time sequence. As shown in FIG. 4, the base station sends the first indication information in a time unit n-p, to notify the terminal that HARQ feedback needs to be performed for a downlink data transmission. The base station sends the second indication information in a time unit n, to indicate the terminal of a time for performing HARQ feedback. The first indication information may further carry information about preset duration. When a time for which the terminal waits to receive the second indication information exceeds the preset duration, the terminal does not continue to wait. For example, if p time units shown in FIG. 4 exceed the preset duration, the terminal does not receive the second indication information in the time unit n. The second indication information carries a time offset 2 (that is, the second time information). Further, the second indication information further carries information about a resource available for a HARQ feedback. The second indication information may be common control information. In this case, both the time offset 2 and the resource available for the HARQ feedback are for a plurality of terminals. The base station may assign one or more HARQ feedback resources to each terminal in the plurality of terminals. For a determined terminal, more information is further required to determine a resource used by the terminal to perform HARQ feedback. Therefore, the first indication information further carries a time offset 1. The time offset 1 indicates an offset of a start position of a resource on which the terminal performs HARQ feedback relative to a start position of all resources available for HARQ feedback. Therefore, the terminal may perform HARQ feedback in an (n + time offset 1 + time offset 2)^{th} time unit. If the base station assigns m HARQ feedback resources to the terminal, the terminal may perform HARQ feedback in an (n + time offset 1 + time offset 2)^{th} time unit to an (n + time offset 1 + time offset 2 + m - 1)^{th} time unit.

The second indication information shown in FIG. 4 is common or group common. Therefore, in addition to the second time information, the terminal that receives the second indication information further needs to learn of the first time information. In this way, a time at which the terminal actually performs HARQ feedback can be learned of. In the case shown in FIG. 3, the first time information is not required.

It should be understood that, a measurement of the first time information or the second time information and the time unit mentioned in the related description in FIG. 3 or FIG. 4 may be a symbol (symbol), a mini-slot (mini-slot), a slot (slot), a subframe (subframe), a frame (frame), or the like, or may be microsecond (µs), millisecond (ms), second (s), minute (min), or the like. This is not limited in this application. Optionally, when a system supports a plurality of numerologies, if a basic unit of the first time information or the second time information is a symbol, a mini-slot, a slot, a subframe, a frame, or the like, the first time information or the second time information further needs to include reference numerology information, for example, information about a subcarrier spacing. Optionally, the reference numerology information may alternatively be predefined.

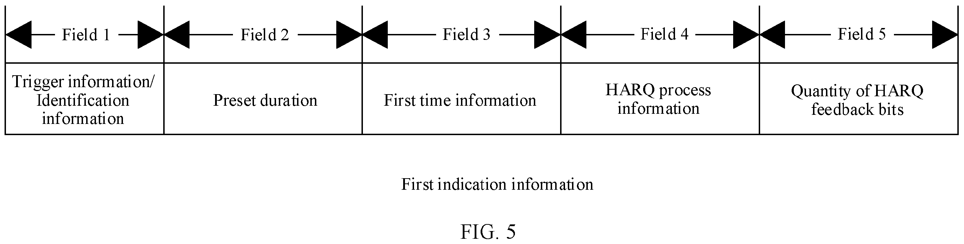

FIG. 5 is a schematic structural diagram of first indication information. As shown in FIG. 5, the first indication information may have a same or similar structure in the downlink control information. Specifically, the first indication information includes a field 1. The field 1 carries trigger information or identification information. The trigger information may be used to trigger the terminal to perform HARQ feedback. The identification information may be used to identify the first indication information, or used to identify that the downlink control information includes the first indication information. Further, the first indication information further includes one or more of a field 2 carrying the information about the preset duration, a field 3 carrying the first time information, a field 4 carrying HARQ process information, and a field 5 carrying a quantity of HARQ feedback bits. The field 5 carrying the quantity of HARQ feedback bits may be a DAI field or an extended DAI field. Further, the field 1 and another field that is in the first indication information may be jointly encoded, and then transmitted. In addition, a sequence of the fields in the first indication information may be randomly changed, and the fields may be discontinuous (for example, another field is inserted). This is not limited in this application.

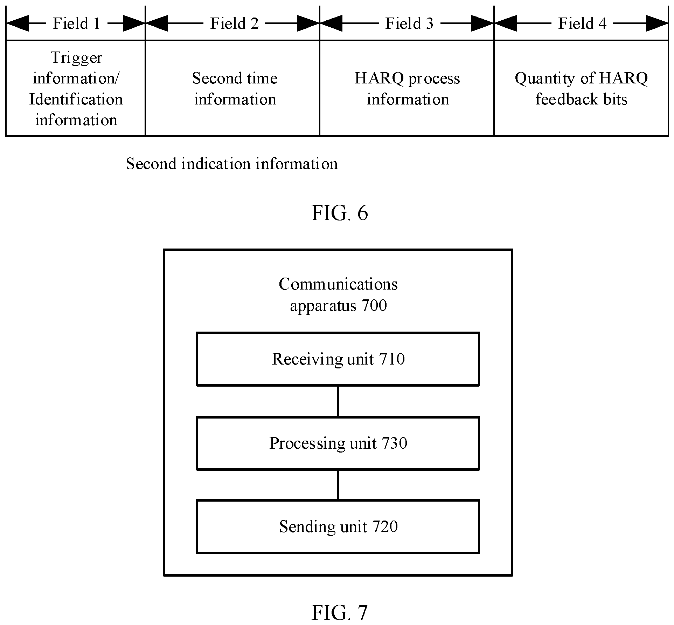

FIG. 6 is a schematic structural diagram of second indication information. As shown in FIG. 6, the second indication information may have a same or similar structure in the downlink control information. Specifically, the second indication information includes a field 1. The field 1 carries trigger information or identification information. The trigger information may be used to trigger the terminal to perform HARQ feedback based on the second time information. The identification information may be used to identify the second indication information, or used to identify that the downlink control information includes the second indication information. Further, the second indication information further includes one or more of a field 2 carrying the first time information, a field 3 carrying HARQ process information, and a field 4 carrying a quantity of HARQ feedback bits. The field 4 carrying the quantity of HARQ feedback bits may be a DAI field or an extended DAI field. Further, the field 1 and another field that is in the second indication information may be jointly encoded, and then transmitted. In addition, a sequence of the fields in the second indication information may be randomly changed, and the fields may be discontinuous (for example, another field is inserted). This is not limited in this application.

Based on a same inventive concept, the embodiments of this application further provide a communications apparatus. The base station may be configured to perform the method performed by the base station or the terminal in the foregoing method embodiment.

FIG. 7 is a possible schematic structural diagram of the communications apparatus in the foregoing method embodiment. In a structure shown in FIG. 7, the communications apparatus 700 may include a receiving unit 710 and a sending unit 720.

In a possible design, the communications apparatus 700 may be a base station, a chip disposed in a base station, a terminal, or a chip disposed in a terminal.

In a possible implementation, the sending unit 720 is configured to: send first indication information, where the first indication information is used to indicate a terminal to perform HARQ feedback; and send second indication information, where the second indication information includes second time information used to indicate the terminal to perform the HARQ feedback. The receiving unit 710 is configured to receive HARQ feedback information of the terminal.

In another possible implementation, the receiving unit 710 is configured to: receive first indication information, where the first indication information is used to indicate a terminal to perform HARQ feedback; and receive second indication information, where the second indication information includes second time information used to indicate the terminal to perform HARQ feedback. The sending unit 720 sends HARQ feedback information to a base station. Further, the communications apparatus 700 may further include a processing unit 730. The processing unit is configured to process received information and process information to be sent.

It should be noted that the communications apparatus 700 may be configured to perform the method performed by the base station or the terminal in the foregoing method embodiment. For an implementation and a technical effect of the implementation that are not described in detail in the communications apparatus 700, refer to related descriptions in the foregoing method embodiment.

Based on a same inventive concept, the embodiments of this application further provide a base station. The base station may be configured to perform the method performed by the base station in the foregoing method embodiment.

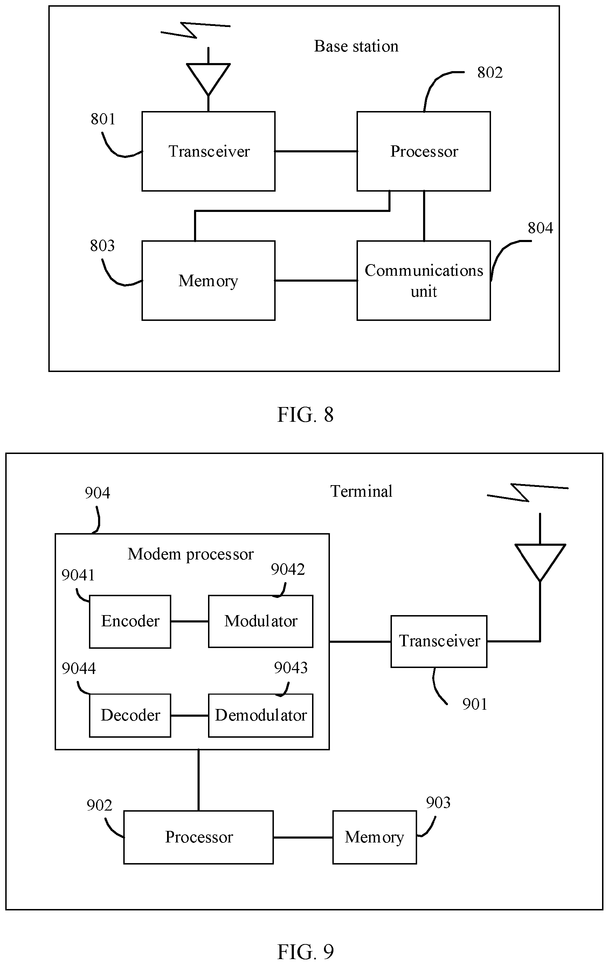

FIG 8 is a possible schematic structural diagram of the base station in the foregoing method embodiment. The base station may include a transceiver 801. The transceiver 801 may further include a receiver and a transmitter.

The transmitter is configured to: send first indication information, where the first indication information is used to indicate a terminal to perform HARQ feedback; and send second indication information, where the second indication information includes second time information used to indicate the terminal to perform the HARQ feedback. The receiver is configured to receive HARQ feedback information of the terminal.

It should be understood that, in some embodiments, the transceiver 801 may be obtained by integrating a transmitter and a receiver. In other embodiments, the transmitter and the receiver may alternatively be independent of each other. Further, the base station may further include a processor 802, a memory 803, and a communications unit 804. The transceiver 801, the processor 802, the memory 803, and the communications unit 804 are connected by using a bus. On a downlink, the transceiver 801 adjusts an output sample of data (for example, PDSCH) or signaling (for example, PDCCH) to be sent, and generates a downlink signal. The downlink signal is transmitted to the terminal in the foregoing embodiment by using an antenna. On an uplink, an uplink signal transmitted by the terminal in the foregoing embodiment is received by using an antenna. The transceiver 801 adjusts the signal received from the antenna and provides an input sample. The processor 802 processes service data and a signaling message, for example, modulates data to be sent, and generates an SC-FDMA symbol. These units perform processing based on a radio access technology (for example, an access technology in LTE, 5G, or another evolved system) used by a radio access network. The processor 802 is further configured to control and manage the base station, to perform processing performed by the base station in the foregoing method embodiment. Specifically, the processor 802 is configured to process received information and process information to be sent. In an example, the processor 802 is configured to support the base station in performing the processing processes related to the base station in FIG. 2 to FIG. 6. In an unlicensed scenario, the processor 802 further needs to control the base station to listen to a channel, to transmit data or signaling. For example, the processor 802 listens to a channel by using a signal received by the transceiver 801 from a transceiver apparatus or an antenna, and controls the signal to be transmitted by using the antenna to preempt the channel. In different embodiments, the processor 802 may include one or more processors, for example, include one or more central processing units (Central Processing Unit, CPU). The processor 802 may be integrated into a chip, or may be a chip.

The memory 803 is configured to store a related instruction and related data, and program code and data that are of the base station. In different embodiments, the memory 603 includes but is not limited to a random access memory (Random Access Memory, RAM), a read-only memory (Read-Only Memory, ROM), an erasable programmable read-only memory (Erasable Programmable Read Only Memory, EPROM), or a portable compact disc read-only memory (Compact Disc Read-Only Memory, CD-ROM). In this embodiment, the memory 803 is independent of the processor 802. In other embodiments, the memory 803 may alternatively be integrated into the processor 802.

It should be noted that the base station shown in FIG. 8 may be configured to perform the method performed by the base station in the foregoing method embodiment. For an implementation and a technical effect of the implementation that are not described in detail in the base station shown in FIG. 8, refer to related descriptions in the foregoing method embodiment.

Based on a same inventive concept, the embodiments of this application further provide a base station. The base station may be configured to perform the method performed by the base station in the foregoing method embodiment.

FIG. 9 is a possible schematic structural diagram of the terminal in the foregoing method embodiment. The terminal may include a transceiver 901. The transceiver 901 may further include a receiver and a transmitter.

The receiver is configured to: receive first indication information, where the first indication information is used to indicate the terminal to perform HARQ feedback; and receive second indication information, where the second indication information includes second time information used to indicate the terminal to perform the HARQ feedback. The transmitter is configured to send HARQ feedback information to a base station.

It should be understood that, in some embodiments, the transceiver 901 may be obtained by integrating by a transmitter and a receiver. In other embodiments, the transmitter and the receiver may alternatively be independent of each other. Further, the terminal may further include a processor 902, a memory 903, and a modem 904. The transceiver 901, the processor 902, the memory 903, and the modem 904 are connected by using a bus.

The transceiver 901 adjusts (for example, performs analog conversion, filtering, amplification, and up-conversion on) an output sample and generates an uplink signal. The uplink signal is transmitted to the base station in the foregoing embodiment by using an antenna. On a downlink, a downlink signal transmitted by the base station in the foregoing embodiment is received by using the antenna. The transceiver 901 adjusts (for example, performs filtering, amplification, down-conversion, and digitization on) the signal received from the antenna and provides an input sample. For example, in the modem processor 904, an encoder 9041 receives service data and a signaling message that are to be sent on an uplink, and processes (for example, performs formatting, encoding, and interleaving on) the service data and the signaling message. A modulator 9042 further processes (for example, performs symbol mapping and modulation on) encoded service data and an encoded signaling message, and provides the foregoing output sample. A demodulator 9043 processes (for example, demodulates) the foregoing input sample and provides symbol estimation. A decoder 9044 processes (for example, de-interleaves and decodes) the symbol estimation and provides the decoded data and the decoded signaling message that are to be sent to the terminal. The encoder 9041, the modulator 9042, the demodulator 9043, and the decoder 9044 may be implemented by the combined modem processor 904. These units perform processing based on a radio access technology (for example, an access technology of LTE, 5G, or another evolved system) used by a radio access network.

The processor 902 controls and manages the terminal, and is configured to perform processing performed by the terminal in the foregoing method embodiment, for example, configured to control the terminal to perform uplink transmission and/or another process of the technology described in this application. In an example, the processor 902 is configured to support the terminal in performing the processing processes related to the terminal in FIG. 2 to FIG. 6. For example, the transceiver 901 is configured to control a transmitted downlink signal/receive a transmitted downlink signal by using an antenna. In different embodiments, the processor 902 may include one or more processors, for example, include one or more CPUs. The processor 902 may be integrated into a chip, or may be a chip.

The memory 903 is configured to store a related instruction and related data, and program code and data that are of the terminal. In this embodiment, the memory 903 is independent of the processor 902. In other embodiments, the memory 903 may alternatively be integrated into the processor 902.

It should be noted that the terminal shown in FIG. 9 may be configured to perform the method performed by the terminal in the foregoing method embodiment. For an implementation and a technical effect of the implementation that are not described in detail in the base station shown in FIG. 9, refer to related descriptions in the foregoing method embodiment.

It may be understood that FIG. 8 and FIG. 9 show only simplified designs of the base station and the terminal. In different embodiments, the base station and the terminal may include any quantity of transmitters, receivers, processors, memories, and the like, and all base stations and terminals that can implement this application fall within the protection scope of this application.

An embodiment of this application provides a communications system. The communications system includes a base station and a terminal. The base station may be the communications apparatus shown in FIG. 7 or the base station shown in FIG. 8. The terminal may be the communications apparatus shown in FIG. 7 or the terminal shown in FIG. 9.

Based on a same inventive concept, the embodiments of this application further provide a computer program product. The computer program product includes computer program code. When the computer program code is run on a computer, the computer is enabled to perform the method in the embodiment shown in FIG. 2 to FIG. 6.

Based on a same inventive concept, the embodiments of this application further provide a computer-readable medium. The computer-readable medium stores program code. When the program code is run on a computer, the computer is enabled to perform the method in the embodiment shown in FIG. 2 to FIG. 6.

Based on a same inventive concept, the embodiments of this application further provide a chip. The chip may be a processor, configured to implement the method in the foregoing method embodiment. Further, the chip is connected to a memory, and is configured to read and execute a software program stored in the memory, to implement the method in the embodiment shown in FIG. 2 to FIG. 6.

Based on a same inventive concept, the embodiments of this application provide a chip. The chip includes a processor and a memory. The processor is configured to read a software program stored in the memory, to implement the method in the embodiment shown in FIG. 2 to FIG. 6.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a special-purpose computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams. These computer program instructions may alternatively be stored in a computer-readable memory that can instruct the computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams. These computer program instructions may alternatively be loaded onto a computer or another programmable data processing device, so that a series of operations and steps are performed on the computer or the another programmable device, thereby generating computer-implemented processing.

It is clear that, a person skilled in the art can make various modifications and variations to this application without departing from the spirit and scope of this application. In this way, this application is intended to cover these modifications and variations of this application provided that they fall within the scope of the claims of this application and their equivalent technologies.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on a computer, the procedure or functions according to the embodiments of the present invention are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

## Claims

1. A hybrid automatic repeat request HARQ feedback method, comprising:
sending, by a base station, first indication information, wherein the first indication information is used to indicate a terminal to perform HARQ feedback;
sending, by the base station, second indication information, wherein the second indication information comprises second time information used to indicate the terminal to perform the HARQ feedback; and
receiving, by the base station, HARQ feedback information of the terminal.

2. The method according to claim 1, comprising:
sending, by the base station, the first indication information within a first channel occupancy time COT, and sending the second indication information within a second COT.

3. The method according to claim 1 or 2, wherein:
the second time information comprises a time offset of a time at which the HARQ feedback is performed relative to the second indication information, or the second time information comprises an absolute time at which the HARQ feedback is performed.

4. The method according to any one of claims 1 to 3, wherein:
a time offset between a time at which the base station sends the first indication information and a time at which the base station sends the second indication information is not greater than preset duration.

5. The method according to claim 4, wherein:
the first indication information further comprises information used to indicate the preset duration.

6. The method according to any one of claims 1 to 5, wherein:
the second indication information further comprises information about one or more HARQ feedback resources assigned to the terminal.

7. The method according to any one of claims 1 to 5, wherein:
the second indication information further comprises information about a plurality of HARQ feedback resources assigned to a plurality of terminals, wherein one or more HARQ feedback resources are assigned to each terminal in the plurality of terminals, and the plurality of terminals comprise the terminal.

8. The method according to claim 7, wherein:
the first indication information further comprises first time information, and the first time information comprises a first time offset; and
the first time information is used to indicate the terminal to perform the HARQ feedback on one or more HARQ feedback resources that are offset by the first time offset and a second time offset relative to the time at which the second indication information is sent.

9. A hybrid automatic repeat request HARQ feedback method, comprising:
receiving, by a terminal, first indication information, wherein the first indication information is used to indicate the terminal to perform HARQ feedback;
receiving, by the terminal, second indication information, wherein the second indication information comprises second time information used to indicate the terminal to perform the HARQ feedback; and
sending, by the terminal, HARQ feedback information to a base station.

10. The method according to claim 9, comprising:
receiving, by the terminal, the first indication information within a first channel occupancy time COT of the base station, and receiving the second indication information within a second COT of the base station.

11. The method according to claim 9 or 10, wherein:
the second time information comprises a time offset of a time at which the HARQ feedback is performed relative to the second indication information, or the second time information comprises an absolute time at which the HARQ feedback is performed.

12. The method according to any one of claims 9 to 11, wherein:
a time offset between the first indication information and the second indication information is not greater than preset duration.

13. The method according to claim 12, wherein:
the first indication information further comprises information used to indicate the preset duration.

14. The method according to any one of claims 9 to 13, wherein:
the second indication information further comprises information about one or more HARQ feedback resources assigned to the terminal.

15. The method according to any one of claims 9 to 13, wherein:
the second indication information further comprises information about a plurality of HARQ feedback resources assigned to a plurality of terminals, wherein one or more HARQ feedback resources are assigned to each terminal in the plurality of terminals, and the plurality of terminals comprise the terminal.

16. The method according to claim 15, wherein:
the first indication information further comprises first time information, and the first time information comprises a first time offset; and
the first time information is used to indicate the terminal to perform the HARQ feedback on one or more HARQ feedback resources that are offset by the first time offset and a second time offset relative to the time at which the second indication information is sent.

17. Abase station, comprising a transmitter and a receiver, wherein
the transmitter is configured to: send first indication information, wherein the first indication information is used to indicate a terminal to perform HARQ feedback; and send second indication information, wherein the second indication information comprises second time information used to indicate the terminal to perform the HARQ feedback; and
the receiver is configured to receive HARQ feedback information of the terminal.

18. A terminal, comprising a transmitter and a receiver, wherein
the receiver is configured to: receive first indication information, wherein the first indication information is used to indicate the terminal to perform HARQ feedback; and receive second indication information, wherein the second indication information comprises second time information used to indicate the terminal to perform the HARQ feedback; and
the transmitter is configured to send HARQ feedback information to a base station.

19. A communications system, comprising a base station and a terminal, wherein
the base station is the base station according to claim 17; and
the terminal is the terminal according to claim 18.

20. A communications apparatus, comprising:
a processor, configured to: couple to a memory, and execute an instruction in the memory, to implement the method according to any one of claims 1 to 16.

21. The apparatus according to claim 20, further comprising:
the memory.

22. A chip, comprising:
a memory, configured to store a computer program; and
a processor, configured to invoke the computer program from the memory and run the computer program, so that a communications apparatus on which the chip system is installed performs the method according to any one of claims 1 to 16.

23. A computer-readable medium, comprising a computer program, wherein when the computer program is run on a computer, the computer is enabled to perform the method according to any one of claims 1 to 16.

24. A computer program product, comprising a computer program, wherein when the computer program is run on a computer, the computer is enabled to perform the method according to any one of claims 1 to 16.

25. The method according to any one of claims 1 to 16 or the foregoing apparatus, wherein:
the first indication information is carried in a PDSCH-to-HARQ feedback timing indicator.

26. The method according to any one of claims 1 to 16 or the foregoing apparatus, wherein:
the second indication information is carried in a PDSCH-to-HARQfeedback timing indicator.

27. The method according to any one of claims 1 to 16 or the foregoing apparatus, wherein:
the first indication information or the second indication information is determined based on a dl-DataToUL-ACK field comprised in radio resource control RRC signaling.
